# FASCICULE DE BREVET EUROPEEN

(11) **EP 3 357 749 B1**
(45) Date de publication et mention de la délivrance du brevet: **18.12.2019**
(21) Numéro de dépôt: 18154830.6
(22) Date de dépôt: 02.02.2018
(51) Int. Cl.: B60N 2/829, B60N 2/894, B60N 2/821

(54) **APPUI-TÊTE DE SIÈGE DE VÉHICULE AUTOMOBILE**
KOPFSTÜTZE AM SITZ EINES KRAFTFAHRZEUGS
HEADREST FOR A MOTOR VEHICLE SEAT

(30) Priorité: 03.02.2017 FR 1750917; 04.10.2017 FR 1759313
(43) Date de publication de la demande: 08.08.2018
(73) Titulaire: TESCA France, 75008 Paris (FR)
(72) Inventeur: GEORGES, Laurent, 75008 Paris (FR)
(74) Mandataire: Sayettat, Julien Christian

(56) Documents cités:
- WO-A1-2010/123503
- WO-A1-2017/032390
- WO-A1-2017/149241
- JP-U- S61 129 554
- US-A1- 2014 327 288

## Description

L'invention concerne un appui-tête de siège de véhicule automobile.

Il est connu, de réaliser un appui-tête de siège de véhicule automobile, ledit appui-tête comprenant :
- une armature de liaison à un dossier dudit siège,
- un boitier en matériau plastique moulé d'absorption d'énergie en cas de choc de la tête d'un passager sur ledit appui-tête, ledit boitier étant monté mobile sur ladite armature de manière à pouvoir être réglé en hauteur par rapport à ladite armature, ledit boitier étant pourvu d'une face avant de réception de la tête d'un passager, ladite face étant notamment habillée par un coussin,
- un moteur électrique monté solidairement audit boitier, ledit moteur coopérant avec au moins une partie d'entrainement solidaire de ladite armature de manière à permettre le réglage en hauteur dudit boitier.

Avec un tel agencement, semblable à un appui-tête connu du document JP S61 129554 U, le positionnement du moteur par rapport à la partie d'entrainement est susceptible de varier par rapport à sa position nominale, ceci en raison de fluctuations dimensionnelles du boitier résultant d'écarts de température, et le cas échéant de dispersions dimensionnelles de fabrication.

En effet, de par sa nature en matériau plastique, généralement à base de polyéthylène, le boitier est sujet à de fortes variations dimensionnelles dans la plage de température d'utilisation d'un véhicule.

Les variations de position du moteur entrainent alors un fonctionnement non répétable de l'appui-tête, selon les conditions d'utilisation, lorsqu'il est actionné en réglage, pouvant notamment se traduire par des bruits parasites observés lors dudit réglage.

En outre, en cas de choc de la tête d'un passager sur l'appui-tête, le comportement dynamique en absorption d'énergie du boitier est affecté par le fait que le moteur lui est associé, ce qui peut présenter un risque pour ledit passager.

L'invention a pour but de pallier ces inconvénients.

A cet effet, l'invention propose un appui-tête de siège de véhicule automobile, ledit appui-tête comprenant :
- une armature de liaison à un dossier dudit siège,
- un boitier en matériau plastique moulé d'absorption d'énergie en cas de choc de la tête d'un passager sur ledit appui-tête, ledit boitier étant monté mobile sur ladite armature de manière à pouvoir être réglé en hauteur par rapport à ladite armature, ledit boitier étant pourvu d'une face avant de réception de la tête d'un passager,
- un moteur électrique monté solidairement audit boitier, ledit moteur coopérant avec au moins une partie d'entrainement solidaire de ladite armature de manière à permettre le réglage en hauteur dudit boitier,
ledit appui-tête présentant en outre les caractéristiques suivantes :
- ledit moteur est couplé à un réducteur de vitesse de manière à former un motoréducteur, ledit motoréducteur étant monté dans ledit boitier de manière à pouvoir débattre en translation pour conserver sa position nominale par rapport à ladite partie d'entrainement indépendamment des variations dimensionnelles dudit boitier,
- il comprend en outre un moyen ressort d'actionnement dudit moto réducteur vers ladite position nominale.

Dans cette description, les termes de positionnement dans l'espace (haut, bas, longitudinal, transversal, avant, supérieur, horizontal, vertical,...) sont pris en référence à un appui-tête monté dans le véhicule en situation d'utilisation.

On précise ici qu'un motoréducteur comprend un moteur électrique et un réducteur de vitesse, ledit réducteur pouvant notamment comprendre un train d'engrenages permettant de démultiplier la rotation du moteur.

L'utilisation d'un motoréducteur présente l'avantage de permettre l'utilisation d'un moteur de faible puissance, et donc de faible poids, encombrement et coût, avec une répercussion directe en termes de poids, encombrement et coût sur l'appui-tête.

Avec l'agencement proposé, du fait que le motoréducteur soit monté dans le boitier en pouvant débattre en coulissement par rapport audit boitier, les variations dimensionnelles dudit boitier n'ont pas d'influence sur le positionnement dudit motoréducteur par rapport à la partie d'entrainement, ledit positionnement étant assuré par le moyen ressort qui place toujours ledit motoréducteur en position nominale.

On garantit ainsi un fonctionnement répétable de l'appui-tête lorsqu'il est actionné en réglage, ceci dans toutes les conditions d'utilisation.

En outre, en cas de choc de la tête d'un passager sur l'appui-tête, le comportement dynamique en absorption d'énergie du boitier n'est pas affecté par la présence du motoréducteur, puisque ce dernier est découplé dudit boitier, ce qui permet d'améliorer la sécurité dudit passager.

D'autres particularités et avantages de l'invention apparaîtront dans la description qui suit, faite en référence aux figures jointes, dans lesquelles :

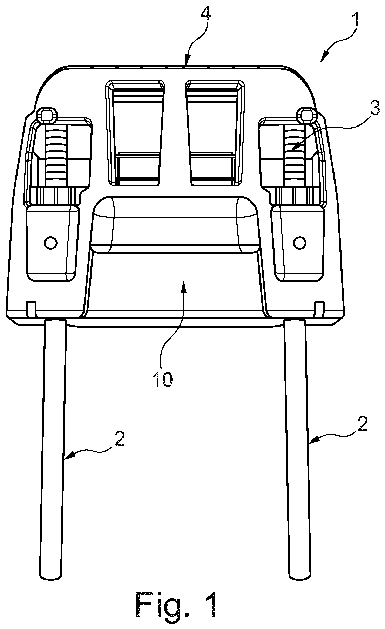

- la figure 1 est une vue schématique partielle de face d'un appui-tête présentant des parties d'entrainement sous forme de crémaillères,

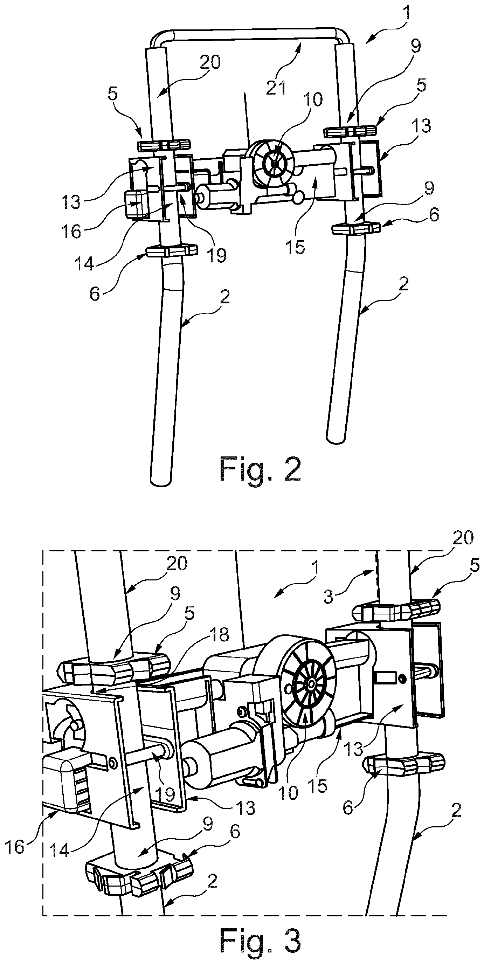

- la figure 2 est une vue schématique partielle selon une première perspective de l'appui-tête de la figure 1 selon une première réalisation,
- la figure 3 est une vue de détail selon un angle de vue analogue à celui de la figure 2,

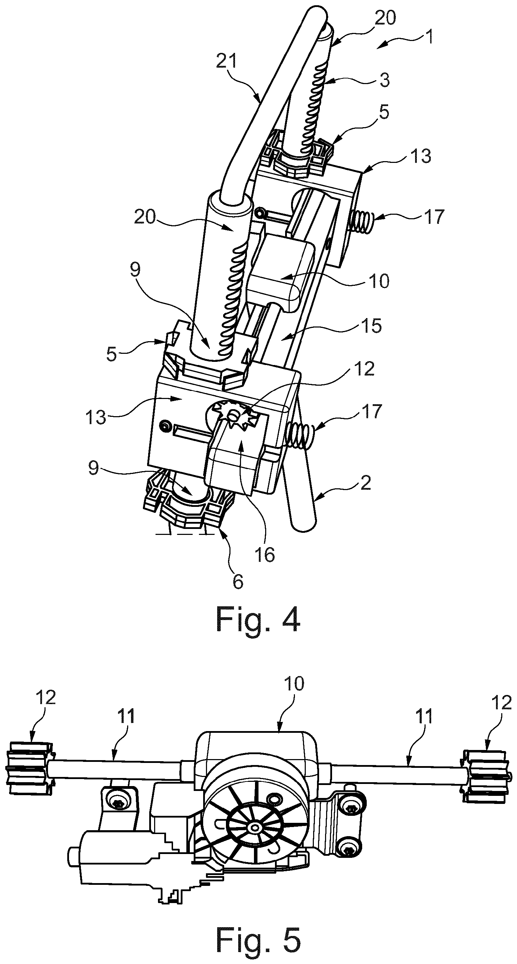

- la figure 4 est une vue schématique partielle selon une deuxième perspective de l'appui-tête de la figure 2,
- la figure 5 est une vue schématique partielle de détail en perspective de l'appui-tête de la figure 2,

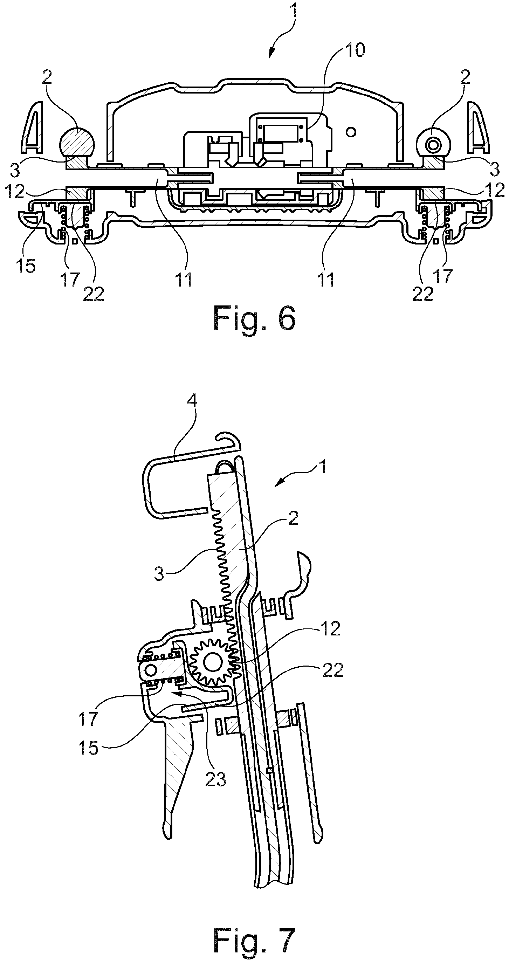

- la figure 6 est une vue schématique en coupe horizontale partielle de l'appui-tête de la figure 1 selon une deuxième réalisation,
- la figure 7 est une vue schématique en coupe verticale partielle de l'appui-tête de la figure 6.

En référence aux figures, on décrit un appui-tête 1 de siège de véhicule automobile, ledit appui-tête comprenant :
- une armature de liaison à un dossier dudit siège,
- un boitier 4 en matériau plastique moulé d'absorption d'énergie en cas de choc de la tête d'un passager sur ledit appui-tête, ledit boitier étant monté mobile sur ladite armature de manière à pouvoir être réglé en hauteur par rapport à ladite armature, ledit boitier étant pourvu d'une face avant de réception de la tête d'un passager, ladite face étant notamment habillée par un coussin non représenté,
- un moteur électrique monté solidairement audit boitier, ledit moteur coopérant avec au moins une partie d'entrainement 3 solidaire de ladite armature de manière à permettre le réglage en hauteur dudit boitier,
ledit appui-tête présentant en outre les caractéristiques suivantes :
- ledit moteur est couplé à un réducteur de vitesse de manière à former un motoréducteur 10, ledit motoréducteur étant monté dans ledit boitier de manière à pouvoir débattre en translation pour conserver sa position nominale par rapport à ladite partie d'entrainement indépendamment des variations dimensionnelles dudit boitier,
- il comprend en outre un moyen ressort d'actionnement dudit moto réducteur vers ladite position nominale.

Selon les réalisations représentées, le motoréducteur 10 est situé en partie basse du boitier 4, de manière à être situé en-dessous de la tête d'un passager du siège.

De la sorte, la tête du passager ne vient pas impacter le coussin d'appui-tête 1 à l'aplomb du motoréducteur 10, ce qui est favorable à sa sécurité.

L'appui-tête 1 peut comprendre en outre, comme illustré sur la première réalisation, une paire de paliers haut 5 et une paire de paliers bas 6 montés par emboitement dans des logements respectifs prévus dans le boitier 4, lesdits logements étant agencés de manière à permettre un débattement transversal desdits paliers par rapport audit boitier de part et d'autre d'une position nominale respective, ledit débattement permettant d'absorber les variations dimensionnelles transversales dudit boitier, lesdits paliers étant pourvus chacun d'un orifice 9 recevant en coulissement la branche 2 correspondante.

Selon les réalisations représentées, l'appui-tête 1 présente en outre les caractéristiques suivantes :
- l'armature comprend deux branches 2 métalliques parallèles de liaison au dossier du siège, lesdites branches étant chacune pourvue d'une crémaillère 3 formant partie d'entrainement,
- le motoréducteur 10 actionne en rotation deux pignons 12 engrenant chacun avec la crémaillère 3 correspondante.

Un tel agencement permet de réaliser un réglage en hauteur particulièrement maîtrisé, ceci du fait de que les deux branches 2 sont mises à contribution de manière symétrique dans ledit réglage.

Selon les réalisations représentées, les crémaillères 3 sont disposées en partie haute des branches 2, de manière à demeurer cachées par le boitier 4 quand ledit boitier est réglé en position maxi-haute.

Selon un mode de réalisation, illustré dans la première réalisation, les crémaillères 3 peuvent être intégrées à des manchons 20 en matériau plastique moulé surmoulant les branches 2.

Selon les réalisations représentées, les crémaillères 3 débouchent vers l'avant.

Un tel agencement permet, en cas de choc de la tête d'un passager sur le coussin, d'aller dans le sens d'engagement des pignons 12 en direction des crémaillères 3, ceci permettant de garantir un blocage en hauteur du boitier 4 favorable à la sécurité dudit passager.

Selon la première réalisation représentée, l'appui-tête 1 présente les caractéristiques suivantes :
- le motoréducteur 10 actionne en rotation deux tiges 11 transversales pourvues chacune d'un pignon 12 d'extrémité engrenant avec la crémaillère 3 correspondante,
- le montage dudit motoréducteur sur le boitier 4 se fait par l'intermédiaire d'une paire de paliers de montage 13 montés en débattement longitudinal dans ledit boitier, lesdits paliers présentant chacun un premier conduit 14 recevant en coulissement une branche 2 respective,
- ledit motoréducteur est associé de manière fixe en partie médiane d'une traverse 15 transversale, les parties extrêmes de ladite traverse étant associées auxdits paliers, de sorte que ledit motoréducteur puisse débattre en translation longitudinale,
- le moyen ressort comprend deux ressorts 17 respectifs d'actionnement desdits paliers de montage pour amener chaque pignon 12 en engrènement vers la crémaillère 3 correspondante.

Selon la première réalisation, les paliers de montage 13 sont disposés entre les paliers haut 5 et bas 6 correspondants.

Selon la première réalisation, les paliers de montage 13 présentent une surface d'appui 18 prenant appui contre les branches 2 sous l'effet des ressorts 17 d'actionnement, ladite surface étant disposée de sorte que le pignon 12 correspondant soit maintenu légèrement écarté de la crémaillère 3 correspondante par rapport à la position qu'il prendrait en l'absence de ladite surface, ce qui permet de minimiser le bruit produit lors des manœuvres de réglage.

Selon la première réalisation, les premiers conduits 14 sont en forme de tranchées, les branches 2 étant confinées dans chacune desdites tranchées par une goupille 19 respective.

Un tel agencement permet un maintien ferme des branches 2 dans les tranchées en cas de choc appliqué à l'appui-tête 1.

Selon la première réalisation, les parties extrêmes de la traverse 15 sont associées aux paliers de montage 13 en s'insérant de façon coulissante dans un deuxième conduit 16 respectif prévu dans chacun desdits paliers de montage, de sorte que le motoréducteur 10 soit longitudinalement fixe par rapport auxdits paliers de montage, ladite traverse étant bloquée en translation transversale par un moyen de blocage, ledit moyen de blocage étant par exemple sous la forme de deux capuchons, non représentés, fixés en extrémités de ladite traverse.

Selon la deuxième réalisation représentée, l'appui-tête 1 présente les caractéristiques suivantes :
- le motoréducteur 10 est associé de manière fixe en partie médiane d'une traverse 15 transversale, les parties extrêmes 22 de ladite traverse étant reçues dans des logements 23 prévus dans ledit boitier, lesdits logements étant agencés de sorte que ladite traverse puisse débattre en translation longitudinale,
- ledit motoréducteur actionne en rotation deux tiges 11 transversales montées en rotation sur ladite traverse et étant pourvues chacune d'un pignon 12 d'extrémité engrenant avec la crémaillère 3 correspondante,
- le moyen ressort comprend deux ressorts 17 respectifs d'actionnement desdites parties extrêmes pour amener chaque pignon 12 en appui contre la crémaillère 3 correspondante.

On décrit enfin des caractéristiques applicables à toutes les réalisations.

Les branches 2 peuvent être tubulaires, les extrémités supérieures desdites branches étant reliées entre elles par une entretoise 21 métallique tubulaire, représentée pour la première réalisation, s'emboitant avec lesdites extrémités.

Le motoréducteur 10 peut être agencé de sorte que le boitier 4 puisse également être actionné manuellement en réglage en hauteur, ceci par appui exercé vers le haut ou vers le bas sur ledit boitier par un passager.

En outre, le motoréducteur 10 peut être dimensionné de manière à se déformer plastiquement, notamment par torsion de tige en faisant partie, pour s'auto-bloquer en cas de choc violent appliqué par la tête d'un passager sur l'appui-tête 1, ce qui permet de maintenir le boitier 4 dans sa position de réglage dans une telle situation et ainsi de contribuer à la sécurité dudit passager.

Pour finir, on décrit que ce principe de combinaison d'un découplage du motoréducteur 10 par rapport au boitier 4 et d'un moyen ressort amenant ledit motoréducteur en position nominale peut être appliqué à une grande diversité d'agencements, par exemple dans le cas d'un motoréducteur 10 actionnant en rotation une tige filetée coopérant avec un orifice fileté solidaire de l'armature.

## Revendications

1. Appui-tête (1) de siège de véhicule automobile, ledit appui-tête comprenant :
• une armature de liaison à un dossier dudit siège,
• un boitier (4) en matériau plastique moulé d'absorption d'énergie en cas de choc de la tête d'un passager sur ledit appui-tête, ledit boitier étant monté mobile sur ladite armature de manière à pouvoir être réglé en hauteur par rapport à ladite armature, ledit boitier étant pourvu d'une face avant de réception de la tête d'un passager,
• un moteur électrique monté solidairement audit boitier, ledit moteur coopérant avec au moins une partie d'entrainement (3) solidaire de ladite armature de manière à permettre le réglage en hauteur dudit boitier,
ledit appui-tête étant **caractérisé en ce que** :
• ledit moteur est couplé à un réducteur de vitesse de manière à former un motoréducteur (10), ledit motoréducteur étant monté dans ledit boitier de manière à pouvoir débattre en translation pour conserver sa position nominale par rapport à ladite partie d'entrainement indépendamment des variations dimensionnelles dudit boitier,
• il comprend en outre un moyen ressort d'actionnement dudit moto réducteur vers ladite position nominale.

2. Appui-tête (1) selon la revendication 1, **caractérisé en ce que** le motoréducteur (10) est situé en partie basse du boitier (4), de manière à être situé en-dessous de la tête d'un passager du siège.

3. Appui-tête (1) selon l'une des revendications 1 ou 2, **caractérisé en ce qu'**il comprend en outre une paire de paliers haut (5) et une paire de paliers bas (6) montés par emboitement dans des logements respectifs prévus dans le boitier (4), lesdits logements étant agencés de manière à permettre un débattement transversal desdits paliers par rapport audit boitier de part et d'autre d'une position nominale respective, ledit débattement permettant d'absorber les variations dimensionnelles transversales dudit boitier, lesdits paliers étant pourvus chacun d'un orifice (9) recevant en coulissement la branche (2) correspondante.

4. Appui-tête (1) selon l'une quelconque des revendications 1 à 3, **caractérisé en ce qu'**il présente en outre les caractéristiques suivantes :
• l'armature comprend deux branches (2) métalliques parallèles de liaison au dossier du siège, lesdites branches étant chacune pourvue d'une crémaillère (3) formant partie d'entrainement,
• le motoréducteur (10) actionne en rotation deux pignons (12) engrenant chacun avec la crémaillère (3) correspondante.

5. Appui-tête (1) selon la revendication 4, **caractérisé en ce que** les crémaillères (3) sont disposées en partie haute des branches (2), de manière à demeurer cachées par le boitier (4) quand ledit boitier est réglé en position maxi-haute.

6. Appui-tête (1) selon l'une quelconque des revendications 4 ou 5, **caractérisé en ce que** les crémaillères (3) sont intégrées à des manchons (20) en matériau plastique moulé surmoulant les branches (2).

7. Appui-tête (1) selon l'une quelconque des revendications 4 à 6, **caractérisé en ce que** les crémaillères (3) débouchent vers l'avant.

8. Appui-tête (1) selon l'une quelconque des revendications 4 à 7, **caractérisé en ce qu'**il présente en outre les caractéristiques suivantes :
• le motoréducteur (10) actionne en rotation deux tiges (11) transversales pourvues chacune d'un pignon (12) d'extrémité engrenant avec la crémaillère (3) correspondante,
• le montage dudit motoréducteur sur le boitier (4) se fait par l'intermédiaire d'une paire de paliers de montage (13) montés en débattement longitudinal dans ledit boitier, lesdits paliers présentant chacun un premier conduit (14) recevant en coulissement une branche (2) respective,
• ledit motoréducteur est associé de manière fixe en partie médiane d'une traverse (15) transversale, les parties extrêmes de ladite traverse étant associées auxdits paliers, de sorte que ledit motoréducteur puisse débattre en translation longitudinale,
• le moyen ressort comprend deux ressorts (17) respectifs d'actionnement desdits paliers de montage pour amener chaque pignon (12) en engrènement vers la crémaillère (3) correspondante.

9. Appui-tête selon l'une quelconque des revendications 4 à 7, ledit appui-tête étant **caractérisé en ce que** :
• le motoréducteur (10) est associé de manière fixe en partie médiane d'une traverse (15) transversale, les parties extrêmes (22) de ladite traverse étant reçues dans des logements (23) prévus dans ledit boitier, lesdits logements étant agencés de sorte que ladite traverse puisse débattre en translation longitudinale,
• ledit motoréducteur actionne en rotation deux tiges (11) transversales montées en rotation sur ladite traverse et étant pourvues chacune d'un pignon (12) d'extrémité engrenant avec la crémaillère (3) correspondante,
• ledit moyen ressort comprend deux ressorts (17) respectifs d'actionnement desdites parties extrêmes pour amener chaque pignon (12) en appui contre la crémaillère (3) correspondante.

## Patentansprüche

1. Kopfstütze (1) am Sitz eines Kraftfahrzeugs, wobei die Kopfstütze umfasst:
- ein Gestell zur Verbindung mit einer Rückenlehne des Sitzes,
- ein Gehäuse (4) aus geformtem Kunststoffmaterial zur Energieabsorption im Fall eines Aufpralls des Kopfes des Fahrgastes auf der Kopfstütze, wobei das Gehäuse beweglich auf dem Gestell montiert ist, sodass es in Bezug auf das Gestell in der Höhe verstellt werden kann, wobei das Gehäuse mit einer Vorderseite zur Aufnahme des Kopfes eines Fahrgastes ausgestattet ist,
- einen Elektromotor, der fest am Gehäuse montiert ist, wobei der Motor mit mindestens einem Antriebsteil (3) zusammenwirkt, der fest mit dem Gestell verbunden ist, sodass die Höhenverstellung des Gehäuses ermöglicht wird, wobei die Kopfstütze **dadurch gekennzeichnet ist, dass**:
- der Motor an ein Untersetzungsgetriebe gekoppelt ist, sodass ein Getriebemotor (10) gebildet wird, wobei der Getriebemotor in dem Gehäuse montiert ist, sodass er verschiebend ausfedern kann, um seine Sollposition in Bezug auf den Antriebsteil unabhängig von Abmessungsänderungen des Gehäuses zu bewahren,
- sie weiter ein Federmittel zum Betätigen des Getriebemotors in die Sollposition umfasst.

2. Kopfstütze (1) nach Anspruch 1, **dadurch gekennzeichnet, dass** sich der Getriebemotor (10) im unteren Teil des Gehäuses (4) befindet, sodass er sich unterhalb des Kopfes eines Fahrgastes am Sitz befindet.

3. Kopfstütze (1) nach einem der Ansprüche 1 oder 2, **dadurch gekennzeichnet, dass** sie weiter ein oberes Lagerpaar (5) und ein unteres Lagerpaar (6) umfasst, die durch Einfügen in jeweilige Aussparungen montiert sind, die in dem Gehäuse (4) vorgesehen sind, wobei die Aussparungen angeordnet sind, sodass sie eine Querausfederung der Lager in Bezug auf das Gehäuse beidseits einer jeweiligen Sollposition ermöglichen, wobei die Ausfederung das Absorbieren der querverlaufenden Abmessungsänderungen des Gehäuses ermöglicht, wobei die Lager jeweils mit einer Öffnung (9) ausgestattet sind, die den entsprechenden Schenkel (2) gleitend aufnimmt.

4. Kopfstütze (1) nach einem der Ansprüche 1 bis 3, **dadurch gekennzeichnet, dass** sie weiter folgende Merkmale aufweist:
- das Gestell umfasst zwei parallele Metallschenkel (2) zur Verbindung mit der Rückenlehne des Sitzes, wobei die Schenkel jeweils mit einer Zahnstange (3) ausgestattet sind, die einen Antriebsteil bildet,
- der Getriebemotor (10) versetzt zwei Ritzel (12) in Drehung, die jeweils mit der entsprechenden Zahnstange (3) ineinandergreifen.

5. Kopfstütze (1) nach Anspruch 4, **dadurch gekennzeichnet, dass** die Zahnstangen (3) im oberen Teil der Schenkel (2) angeordnet sind, sodass sie von dem Gehäuse (4) verdeckt bleiben, wenn das Gehäuse auf oberste Position verstellt wird.

6. Kopfstütze (1) nach einem der Ansprüche 4 oder 5, **dadurch gekennzeichnet, dass** die Zahnstangen (3) in Muffen (20) aus geformtem Kunststoffmaterial integriert sind, die die Schenkel (2) umformen.

7. Kopfstütze (1) nach einem der Ansprüche 4 bis 6, **dadurch gekennzeichnet, dass** die Zahnstangen (3) nach vorne münden.

8. Kopfstütze (1) nach einem der Ansprüche 4 bis 7, **dadurch gekennzeichnet, dass** sie weiter folgende Merkmale aufweist:
- der Getriebemotor (10) versetzt zwei querverlaufende Stangen (11) in Drehung, die jeweils mit einem Endritzel (12) ausgestattet sind, das mit der entsprechenden Zahnstange (3) ineinandergreift,
- die Montage des Getriebemotors auf dem Gehäuse (4) erfolgt mittels eines Paares von Montagelagern (13), die längs ausfedernd in dem Gehäuse montiert sind, wobei die Lager jeweils einen ersten Kanal (14) aufweisen, der einen jeweiligen Schenkel (2) gleitend aufnimmt,
- der Getriebemotor ist festsitzend im mittleren Teil mit einer querverlaufenden Querstrebe (15) verbunden, wobei die Endteile der Querstrebe mit den Lagern verbunden sind, sodass der Getriebemotor der Länge nach verschiebend ausfedern kann,
- das Federmittel umfasst zwei jeweilige Federn (17) zur Betätigung der Montagelager, um jedes Ritzel (12) mit der entsprechenden Zahnstange (3) in Eingriff zu bringen.

9. Kopfstütze (1) nach einem der Ansprüche 4 bis 7, wobei die Kopfstütze **dadurch gekennzeichnet ist, dass**:
- der Getriebemotor (10) festsitzend im mittleren Teil mit einer querverlaufenden Querstrebe (15) verbunden ist, wobei die Endteile (22) der Querstrebe in Aussparungen (23) aufgenommen werden, die in dem Gehäuse vorgesehen sind, wobei die Aussparungen so angeordnet sind, dass die Querstrebe der Länge nach verschiebend ausfedern kann,
- der Getriebemotor zwei querverlaufende Stangen (11) in Drehung versetzt, die drehend auf der Querstrebe montiert sind und jeweils mit einem Endritzel (12) ausgestattet sind, das mit der entsprechenden Zahnstange (3) ineinandergreift,
- das Federmittel zwei jeweilige Federn (17) zur Betätigung der Endteile umfasst, um jedes Ritzel (12) gegen die entsprechende Zahnstange (3) zu drücken.

## Claims

1. Headrest (1) for a motor vehicle seat, said headrest comprising:
- a frame for connection to a backrest of said seat,
- a housing (4) made of moulded plastics material that absorbs energy in the event of an impact of a passenger's head against said headrest, said housing being mounted such that it can move on said frame so as to allow the height of said housing to be adjusted relative to said frame, said housing being provided with a front face for receiving a passenger's head,
- an electric motor integrally mounted to said housing, said motor engaging with at least one drive part (3) integral with said frame so as to allow the height of said housing to be adjusted,
said headrest being **characterised in that**:
- said motor is coupled to a reduction gear so as to form a geared motor (10), said geared motor being mounted in said housing such that it can undergo a translational displacement in order to retain the nominal position thereof relative to said drive part independently from the dimensional changes of said housing,
- it further comprises a spring means for actuating said geared motor towards said nominal position.

2. Headrest (1) according to claim 1, **characterised in that** the geared motor (10) is located in the bottom part of the housing (4), so as to be located beneath the head of a passenger in the seat.

3. Headrest (1) according to any of claims 1 or 2, **characterised in that** it further comprises a pair of top bearings (5) and a pair of bottom bearings (6) mounted by interlocking inside respective recesses provided in the housing (4), said recesses being arranged so as to allow a transverse displacement of said bearings relative to said housing on either side of a respective nominal position, said displacement allowing the transverse dimensional changes of said housing to be absorbed, each of said bearings being provided with an orifice (9) receiving the corresponding branch (2) by the sliding thereof.

4. Headrest (1) according to any of claims 1 to 3, **characterised in that** it further has the following features:
- the frame comprises two parallel metal branches (2) for connection to the backrest of the seat, each of said branches being provided with a rack (3) forming a drive part,
- the geared motor (10) actuates two pinions (12) in rotation, each meshing with the corresponding rack (3).

5. Headrest (1) according to claim 4, **characterised in that** the racks (3) are disposed in the top part of the branches (2), so as to remain hidden by the housing (4) when said housing is adjusted to the highest position thereof.

6. Headrest (1) according to any of claims 4 or 5, **characterised in that** the racks (3) are integrated into sleeves (20) made of moulded plastics material overmoulding the branches (2).

7. Headrest (1) according to any of claims 4 to 6, **characterised in that** the racks (3) open out towards the front.

8. Headrest (1) according to any of claims 4 to 7, **characterised in that** it further has the following features:
- the geared motor (10) actuates two transverse rods (11) in rotation, each provided with an end pinion (12) meshing with the corresponding rack (3),
- the assembly of said geared motor on the housing (4) is carried out via a pair of assembly bearings (13) mounted by longitudinal displacement in said housing, each of said bearings having a first duct (14) receiving a respective branch (2) by the sliding thereof,
- said geared motor is associated in a fixed manner, in the middle part thereof, with a transverse crosspiece (15), the end parts of said crosspiece being associated with said bearings, such that said geared motor can undergo a longitudinal translational displacement,
- the spring means comprises two respective springs (17) for actuating said assembly bearings in order to bring each meshed pinion (12) towards the corresponding rack (3).

9. Headrest according to any of claims 4 to 7, said headrest being **characterised in that**:
- the geared motor (10) is associated in a fixed manner, in the middle part thereof, with a transverse crosspiece (15), the end parts (22) of said crosspiece being received in recesses (23) provided in said housing, said recesses being arranged such that said crosspiece can undergo a longitudinal translational displacement,
- said geared motor actuates two transverse rods (11) in rotation, which are mounted such that they rotate on said crosspiece and are each provided with an end pinion (12) meshing with the corresponding rack (3),
- said spring means comprises two respective springs (17) for actuating said end parts in order to bring each pinion (12) to bear against the corresponding rack (3).
